# EUROPEAN PATENT APPLICATION

(11) **EP 2 851 837 A2**
(43) Date of publication of application: **25.03.2015**
(21) Application number: 14185525.4
(22) Date of filing: 19.09.2014
(51) Int. Cl.: G06F 21/62

(54) **Controlling disclosure of structured data**

(30) Priority: 23.09.2013 GB 201316880
(71) Applicant: Clearswift Limited, Reading, Berkshire RG7 4SA (GB)
(72) Inventor: Schofield, Kevin Charles, Thatcham, Berkshire RG18 3GB (GB); Sharp, Alexander Charles, Herts, HP1 2QA (GB)
(74) Representative: O'Connell, David Christopher

(57) **Abstract**

A method of applying a policy to a text comprises searching the text for data having a predefined form; and searching a dataset for additional data associated with any data having the predefined form found in the text. A supplementary search query is generated using said additional data; and the text is searched using the supplementary search query. The policy is then applied based on a result of the search using the supplementary search query.

## Description

This invention relates to applying policy to textual content to control the disclosure of sensitive information, and in particular to using the presence of data from structured sources in combination with the presence of key textual phrases in determining the sensitivity of the textual content.

In electronic mail systems, it is common to apply policies to messages that are sent. That is, a system administrator is able to set various rules, and a policy manager in the system tests whether a message complies with those rules. If the message complies with the rules, then the message is sent to the intended destination. However, if the message does not comply with the rules, the policy can determine the action that is to be taken.

For example, the action that is taken in the event of a policy violation might be discarding the message, quarantining the message and sending a warning to the sender and/or intended recipient of the message, or the like.

Many messages contain information in the form of text, for example in messages or in documents that are sent as attachments to messages. It is known to apply policies so that extracts of a text are examined, in order to determine whether the text may be sent as intended. It is also known to apply policies so that the text as a whole is examined, in order to determine whether the text may be sent as intended.

According to a first aspect of the present invention, there is provided a method of applying a policy to a text, the method comprising:
searching the text for data having a predefined form;
searching a dataset for additional data associated with any data having the predefined form found in the text;
generating a supplementary search query using said additional data;
searching the text using the supplementary search query; and
applying the policy based on a result of the search using the supplementary search query.

According to a second aspect of the present invention, there is provided a method of applying a policy to a text in information that is intended to be transferred, the method comprising:
searching the text for data having a predefined form;
searching a dataset for additional data associated with any data having the predefined form found in the text;
generating a supplementary search query using said additional data;
searching the text using the supplementary search query;
applying the policy based on a result of the search using the supplementary search query; and
allowing or preventing the transfer of the information, in response to a result of applying the policy.

The data having the predefined form may comprise a token in the text, or a plurality of tokens.

The method may comprise searching the dataset using a fuzzy matching technique.

The searching the dataset for additional data may comprise searching a database.

The searching the dataset for additional data may comprise searching a record of the database containing the data having the predefined form found in the text.

The searching the dataset for additional data may comprise searching a plurality of fields of the record of the database containing the data having the predefined form found in the text.

The searching the text using the supplementary search query may comprise searching the text for the additional data.

The searching the text using the supplementary search query may comprise searching the text for the additional data in a specific positional or conditional relationship to the data having the predefined form found in the text.

The searching the text using the supplementary search query may further comprise searching the text for one or more phrases, regular expression matches or text entities.

The searching the text using the supplementary search query may further comprise searching the text for one or more phrases, regular expression matches or text entities in a specific positional or conditional relationship to the data having the predefined form found in the text or to the additional data.

The searching the text using the supplementary search query may further comprise searching the text for one or more phrases, regular expression matches or text entities that are qualified with another qualifier.

The dataset may comprise a database.

The dataset may comprise an indexed data file.

The dataset may comprise a real-time information retrieval system.

The method may comprise receiving the text in an electronic mail message, wherein the applying the policy to the text may comprise determining at least one applicable policy based on a sender and a recipient of the electronic mail message.

The method may comprise receiving the text in an electronic mail message, wherein the applying the policy to the text may comprise determining whether an applicable policy applies to a message content and/or to an attachment of the message and/or to the information content of metadata of the electronic mail message.

The method may comprise receiving the text in a download from an external network, wherein the applying the policy to the text may comprise determining at least one applicable policy based on an identity of a user requesting the download.

The method may comprise receiving the text in an upload to an external network, wherein applying the policy to the text may comprise determining at least one applicable policy based on an identity of a user requesting the upload.

The method may comprise receiving the text in a download from a server, wherein applying the policy to the text may comprise determining at least one applicable policy based on an identity of a user requesting the download.

The method may comprise receiving the text in an upload to a server, wherein applying the policy to the text may comprise determining at least one applicable policy based on an identity of a user requesting the upload.

The method may comprise receiving the text in a data transfer to a removable storage device from a user device having an endpoint protection product.

The method may comprise receiving the text in a data transfer from a removable storage device to a user device having an endpoint protection product.

Applying the policy to the text may comprise identifying redactable text in the received text.

Redacting the text may comprise:
identifying in the text a token that might be involved in a policy violation;
recording an extent of the token within the text content; and
determining a position and extent of each character within the token; and blanking each character in the token.

The method may comprise ensuring that every character in the token is blanked, or that that no character in the token is blanked.

The method may comprise replacing the token that might be involved in a policy violation with a replacement word.

The method may comprise blanking a subset of the characters in the token.

The method may comprise identifying non-displayable content in redactable text, and retaining said non-displayable content during the redaction.

The policy may determine whether or not to redact sub-expressions in the text.

Applying the policy to the text may comprise applying the policy based on a result of the search using the supplementary search query combined with a result of searching the text using a predefined expression list.

According to a further aspect of the invention, there is provided a computer program product, comprising instructions for carrying out the method according to the first or second aspect.

This has the advantage that a policy can be applied to restrict unauthorised use of sensitive information.

For a better understanding of the present invention, and to show how it may be put into effect reference will now be made, by way of example only, to the accompanying drawings, in which:-
Figure 1 is a schematic diagram of a computer network in accordance with an aspect of the present invention;
Figure 2 is a flow chart illustrating a method in accordance with an aspect of the invention; and
Figure 3 is a flow chart illustrating in more detail a part of the method of Figure 2.

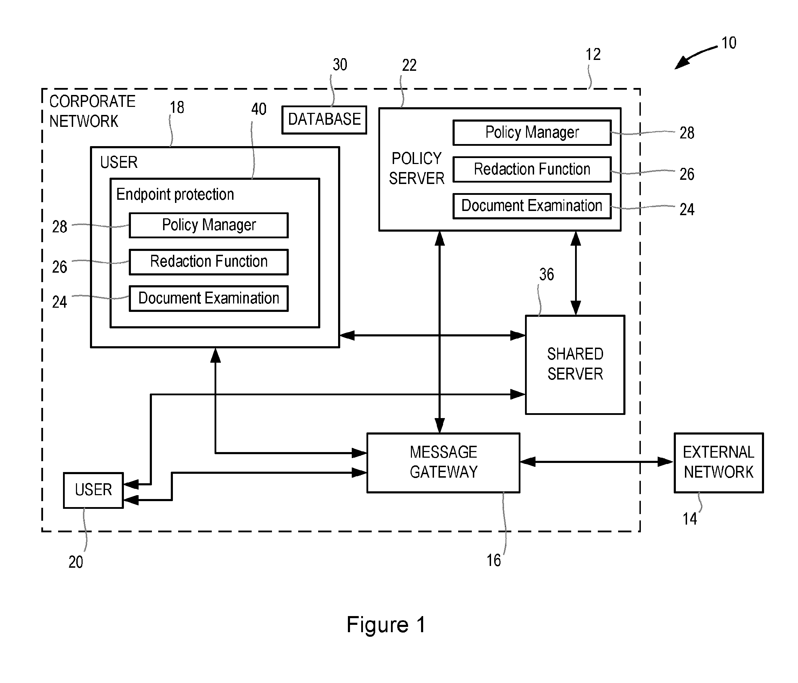

Figure 1 shows a part of a computer network 10. Specifically, Figure 1 shows a part of a corporate network 12, having a connection to an external network 14. In one embodiment, the corporate network 12 may for example be a local area network (LAN) within an organisation, but it will be appreciated that the methods described herein could be applied in other situations. For example, the method described herein could be implemented in a non-corporate network, such as within a service provider's network, or in secured wireless communications such as naval ship to shore. Similarly, the external network 14 could for example be the internet, but it will be appreciated that the methods described herein could be applied in other situations, for example in a cross-domain scenario, where there are two local area networks of different security levels (for example "secret" and "top secret") and email needs to pass between the networks in a controlled manner.

In the illustrated network, the corporate network 12 includes a message gateway 16, through which all electronic mail messages are passed. Figure 1 also shows users 18, 20 on the corporate network 12. Of course, there will be many more than two users in a typical network, but it is sufficient to show two such users to illustrate the operation of the method. The users 18, 20 may be connected to the corporate network through wireless connections, Ethernet connections, or any other suitable wired connection.

The users 18, 20 are able to send and receive electronic mail messages to and from each other, and to and from other users on the corporate network 12 that are not shown in Figure 1, and to and from other users on the external network 14. All such messages are passed through the message gateway 16.

Although only one such message gateway is shown in this example, it will be appreciated that typical corporate networks may have more complex structures. For example, there may be one message gateway for handling internal mail messages between users on the network, and a separate message gateway for handling external mail messages between a user on the network and a user on the external network. However, the illustrated architecture is sufficient for an explanation of the present invention.

Figure 1 also shows a policy server 22, connected to the message gateway 16. As will be understood, the policy server applies message policies to messages passing through the message gateway 16. In an architecture with multiple message gateways, there may be a policy server associated with each gateway, or there may be a single policy server associated with multiple message gateways.

As described in more detail below, the policy server 22 includes at least a document examination block 24, a redaction function 26, and a policy manager 28. In general terms, the purpose of the policy server 22 is to enforce policies that are set by, for example, a system administrator of the corporate network 12. For example, such policies may prohibit the sending of certain messages between certain users, or at least place conditions on the sending of such messages.

The network 12 may also include a shared server 36, such that a user can upload a file to the shared server, for later download by another user. The policy server 22 is also able to enforce policies relating to such file transfers. For example, such policies may prohibit the storage of certain files within a document management system, or may at least place conditions on such activities, with the files being identified based on their textual content.

Figure 1 also shows one user device 18 being provided with an endpoint protection product 40, of a type which is intended for deployment on a desktop or laptop computer, or the like. The endpoint protection product 40 is shown in Figure 1 as including similar functions to those included in the policy server 22, namely a document examination block 24, a redaction function 26, and a policy manager 28. In general terms, one purpose of the endpoint protection product 40 is to enforce policies relating to the transfer of information between the user 18 to and from removable storage devices such as optical storage discs (for example, CDs, DVDs, etc) and memory sticks. For example, such policies may prohibit the storage of certain files on a removable storage device, or may prohibit the transfer of certain files from such a device, or may at least place conditions on such activities, with the files being identified based on their textual content.

In the case of the policy server 22, the policies may for example relate to messages that contain specified file types as attachments, or that exceed a specified size. In this illustrated example, the policies relate to the information content of a message. More specifically, the policies may relate equally to the information content of the body of an email message, to the information content of an attachment to an email message, and/or to the information content of the metadata of an email message such as the subject. Furthermore, policies may relate equally to different aspects of a structured format used within the email body or attachment including but not limited to the main body text, page headers and footers, footnotes, endnotes, annotations, textboxes and metadata.

In the case of the endpoint protection product 40, the policies may relate to the textual content of any file that the user seeks to transfer.

The policy server 22 has access to at least one dataset, which provides access to information held in a structured form such as a database 30. The dataset could equally be an indexed data file, or a software component to access information within a directory or some other real-time information retrieval system. It will be appreciated that the content of the dataset will be relevant to the organisation managing the corporate network.

For example, in many corporate networks, the database 30 will store personal information about customers of the organisation in a Customer Relationship Management system. In a corporate network of a medical organisation, the database 30 will store personal information about patients. The dataset could equally provide employee details from the corporate directory.

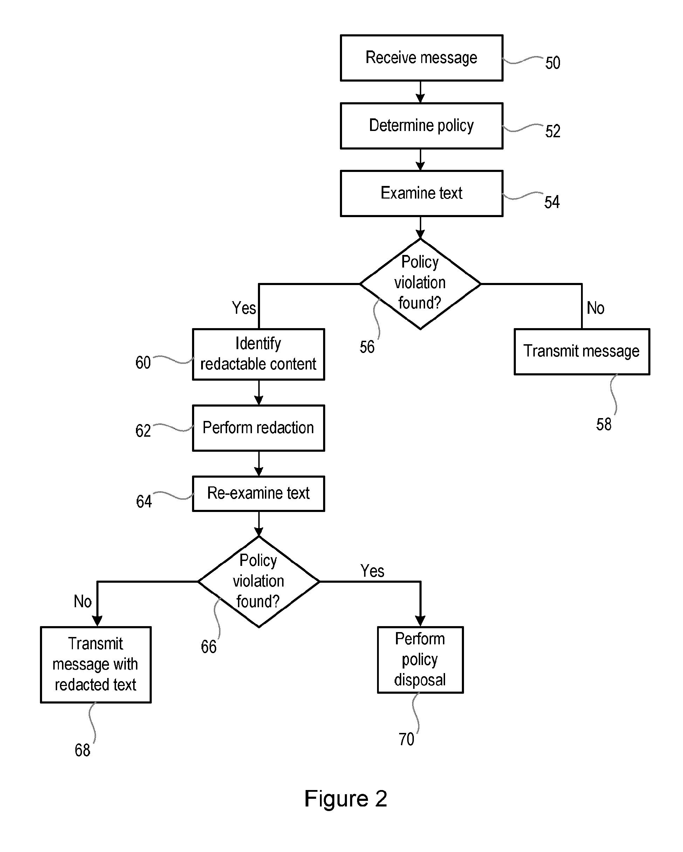

Figure 2 is a flow chart, illustrating a process performed by software running on the policy server 22, in order to implement policies related to the content of electronic mail messages. The same process is performed by the software of the endpoint protection product 40. More generally, the method can be implemented by a computer program product, provided on any transitory or non-transitory medium, containing instructions for causing a programmed device to perform the method described herein.

Although the invention is described herein with reference to a specific example in which the process is applied in order to implement policies related to the content of electronic mail messages, the same or similar techniques can be used to implement policies relating to the content of web traffic, or more generally to policies that control any disclosure of information. For example, policies can be used to control the transfer of information using file transfer methods, or instant messaging, and can also be used to control the transfer of information in document management and publishing systems.

In step 50, a message is received, having some textual content, either in the body of the message, and/or in an attachment to the message (including in structural constructs such as page headers and footers, footnotes and endnotes of the message or its attachment), and/or in the message metadata. In an embodiment used to implement policies relating to the content of web traffic, or to policies that control other information transfers, the text may be the text of a webpage, or the text of a file that is being uploaded or downloaded, as examples.

In step 52, it is determined which policy or policies apply to the message. For example, the policy manager may have been configured such that messages sent between any member of a first group of users and any member of a second group of users may not contain content of a certain type, while messages sent between any member of a third group of users and any member of a fourth group of users may not contain content of a different type. Purely as an example, a first policy may specify that messages sent from members of a company's finance team to members of the company's marketing team may not contain any payment card numbers (i.e. sixteen digit numbers, especially when divided into four blocks of four digits); a second policy may specify that messages sent from members of the company's engineering team to recipients outside the company may not refer to the name of a secret internal project; and a third policy may specify that messages sent from any user must not contain profanity.

When the received text forms part of some content that is being downloaded from a website, in the use of a web browser program for example, or forms part of some content that is being uploaded to a website, the policy or policies that apply to the text will typically be based on the user who is requesting the transfer, possibly amongst other factors. More generally, in this example the text may be received as part of an upload to, or a download from, any external network.

More generally, it is known that policies may attempt to deal with issues such as: controlling offensive material; controlling the disclosure of intellectual property; and controlling the disclosure of sensitive information including Personal Identifiable Information (PII), Payment Card Information (PCI) and Corporate Infrastructure Information (CII) such as usernames, IP addresses, machine names and URLs.

Thus, in step 52, it is determined, for example based on the identities of the sender and recipient (but potentially also based on other information) which policies apply to the received message.

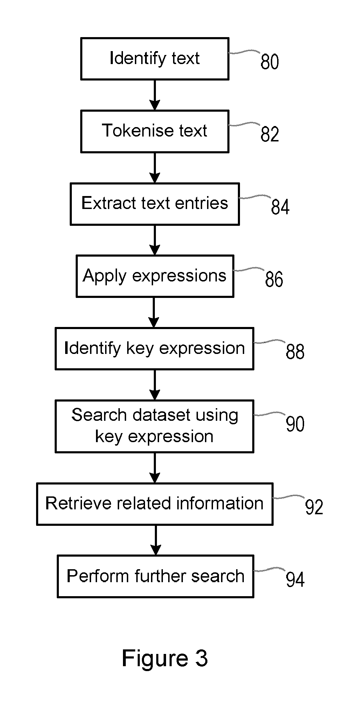

In step 54, the relevant textual content is examined, to determine whether it complies with the applicable policies. Figure 3 illustrates in more detail the process of examining the text.

First, the relevant text is identified in step 80. As mentioned above, the policy may for example be set such that the text in the body of the message is examined, that the text in any attachment to the message is examined and/or the text within the message metadata is examined. This may involve the identification of the format of any attachments and performing any decomposition such as extracting files from within an archive and continuing this identification/decomposition process in a recursive manner. The identification of the format and examination of structured formats for the presence of aspect such as page headers and footers being used to identify text that is relevant to the policy. For example, a policy may specify that specific text should not appear in the page footer of a document and the relevant text could be found in the page footer of a word processing document which is within a ZIP archive that has been attached to an email message.

Having identified the relevant text from the message, the relevant textual content is examined to determine whether the information is acceptable, that is, conforms to a policy.

For example, as shown in Figure 3, this may be done by tokenising the text in step 82 (that is, dividing the text into smaller components, such as words), and then searching the tokens for specific tokens or combinations of tokens. Combinations could be simple sequences that form a phrase, or token sequences that are combined with logical operations such as "AND" and "OR" and positional/proximity operations such as "BEFORE", "AFTER" and "NEAR". This search construct is known as an expression, and so applying the expression in step 86 involves searching the text for the tokens or combinations of tokens in each expression. The search will result in a number of matches for each token or token combination and the expression will evaluate to true if and only if there is at least one combination of matches that satisfy the expression.

Using a technique known as Text Entity Extraction it is also possible in step 84 to identify higher order information within the textual content; for example, names, dates, Credit Card Numbers, National Insurance Numbers and Social Security Numbers; by examining the tokens. Text Entities such as these can also be used in place of tokens within the expressions when applying the expression in step 86.

Similarly, regular expressions can take the place of tokens within a search.

It is relevant that much of the information, whose disclosure must be controlled, exists within a corporate network in a structured form, for example within databases. For example, personal information about clients is held in the database of a Customer Relationship Management system. However, if this information is sent between individuals or groups of individuals, this may be in an unstructured form, for example in a report or in a reply to an email enquiry. In order to be able to enforce a policy on the disclosure of all sensitive information it is advantageous that this structured information can be identified within unstructured textual information and that the relevant policy can be applied to it.

For example, as mentioned above, policies may attempt to control the disclosure of sensitive information including Personal Identifiable Information (PII) such as Social Security Numbers; Payment Card Information (PCI) such as Credit Card Numbers; and Corporate Infrastructure Information (CII) such as usernames, IP addresses, machine names and URLs.

It is also relevant that individual pieces of information become more important when they are related to each other. For example, a Credit Card Number, the name of the holder and the expiry date when present together represents a greater disclosure of sensitive information than the Credit Card Number alone.

To find such interrelated information within relevant textual content it is necessary to first find a single key piece of information within the relevant textual content in step 88 of the process, use that to search a dataset in step 90, retrieve the related information from the dataset in step 92, and then perform a further search of the relevant textual content for information retrieved from the dataset in step 94. This process is known as qualification.

The key piece of information could be a Text Entity but could equally be a regular expression or simple phrase.

The key piece of information within the relevant textual content could be in one of many forms as it is free form text, for example, a Credit Card Number could be written as a 16 digit number or 4 groups of 4 digit numbers separated by a space or hyphen. However, information held in a dataset will exist in one simple form; in the case of the Credit Card Number this is likely to be the 16 digit number. To successfully locate the key information within the dataset in step 90 a form of fuzzy matching is performed.

It should also be noted that when this further search is performed that the way in which the pieces of information are combined with one another and possibly with other textual content and relative proximity is also important. To that end the search is performed by constructing a supplementary expression using the information retrieved from the dataset. For example, the expression ".KEY..NEAR..FIELD=surname..NEAR. expiry .TextEntity=Date." where the key piece of information in the main expression was the Credit Card Number Text Entity would produce a supplementary search to find the value of the surname field near the Credit Card Number which is also near the phrase "expiry" followed by the value of the date field. Such an expression is known as a qualifier expression.

Thus, the supplementary search involves searching the text for the information retrieved from the dataset, that is, the additional data, in a specific positional or conditional relationship to the key piece of information. The supplementary search can also involve searching for fixed text (tokens, text entities, regular expressions) as well as the additional data retrieved from the dataset, again possibly subject to conditional and proximity conditions.

To qualify a Text Entity within an expression a syntax such as the following is used ".TextEntity=type?qualifier." which means find a Text Entity of the specified type and qualify it with a qualifier of the given name. In the case of an indexed data file dataset the qualifier is defined by a dataset, the name of the record field to use for the lookup and the qualifier expression. For other types of dataset a similar definition is used but all have a qualifier expression.

Once the supplementary expression has been used to search the relevant textual content, if it evaluates to true then the occurrence of the key information found by the main expression that was qualified is considered to be a match otherwise it is not.

Qualifier expressions can themselves search of key pieces of information that require qualification. This allows related information that exists in different datasets to be combined in a single qualification. For example, the key piece of information in the main expression could be an insurance claim number which has a qualifier expression ".KEY..AND. FIELD=surname3party..AND. FIELD=incidentdate..AND. TextEntity-PolicyNo?inspol" which searches for the surname of the 3^{rd} party, the date of the incident and insurance policy number retrieved from the claims dataset. The insurance policy number is qualified using a qualifier inspol which has a qualifier expression ".KEY..AND. FIELD=surname..AND. FIELD=postcode." which searches for the surname of the policyholder along with the postcode from their address retrieved from the policyholder dataset. It will be understood that in this case the first qualifier expression can only evaluate to true if the second one also evaluates to true.

When dealing with offensive material, the presence of a single token or combination of tokens might not be enough for the text as a whole to be considered unacceptable, but a combination of tokens repeated enough times, or the presence of certain tokens in the presence of other tokens might be enough for the text to be considered unacceptable.

As an example, a policy may be defined in terms of an expression list that consists of a set of entries, each of which consists of an expression with an associated weighting. The weighting can have a positive integer value or a special violation value. A threshold value is also set.

An initial score is set to zero, and the textual content is tokenised and any Text Entities are identified. The tokens and Text Entities are then searched to determine, for each expression in the expression list, whether it matches the textual content. When a match is found, the weighting for the relevant expression is added to the score. If the weighting is the special violation value, then the score is set to the threshold value of the expression list.

In step 56 of the process shown in Figure 2, after all of the expressions have been used as the basis for the search, the final score is examined. If the score is greater than or equal to the threshold value, then it is determined that the policy has been violated.

In this case, the final score, used to determine whether there is any policy violation, depends on the result of the initial search, in which the relevant text is searched for matches with any of the initially defined expressions, and on the result of the supplementary search, in which the relevant text is searched for matches with any supplementary expression.

If it is found that the policy has not been violated, then the process passes to step 58, and the message is transmitted as intended by the sender. In an embodiment used to implement policies relating to the content of web traffic, or policies that control the transfer of information, the transfer of the file, or the information, is permitted. However, if it is found in step 56 that transmitting the message would violate the policy, the process passes to step 60. The intention here is to mitigate the policy violation, such that the message can still be sent.

Thus, in step 60, the redactable text in the message is identified. Then, the process passes to step 62, in which an attempt is made to mitigate every match of every expression in the expression list. A match is mitigated by redacting each of the tokens and Text Entities that form the match. When a Text Entity is formed from a number of tokens, it can be redacted by redacting the constituent tokens.

The expression list may contain, for some or all of its entries, instructions to indicate what form of redaction should take place in order to mitigate any violation caused by the use of the relevant expression.

The form that the redaction should take is dependent upon the nature of the text and the context in which it is being used; it is therefore advantageous that the redaction process can be controlled via the policy. For example, when a text contains a credit card number and an associated expiry date, it may be appropriate in some business contexts that the credit card number is redacted but the associated expiry date is not. One way in which this can be accomplished is to embed a unary operator within the expression, which marks the following sub-expression such that any matches to that sub-expression will be redacted but matches to other sub-expressions will not. For example, an expression of the form ".REDACT..TextEntity=CreditCardNumber. .NEAR..TextEntity=Date." would result in any credit card numbers being redacted but any dates near them would not be redacted. Alternatively, an expression of the form ".REDACT. (.TextEntity=CreditCardNumber..NEAR..TextEntity=Date.)" would result in both the credit card numbers and any dates near to them being redacted.

Controlling how matches to terms in a supplementary expression is equally important and can be accomplished in two ways. Firstly, if the key piece of information in the main expression is in a sub-expression that is to be redacted then the key piece of information and all of the matches found by the supplementary expression are redacted. Secondly, the sub-expressions within the qualifier expression, including the ".KEY." sub-expression, can be preceded by the redaction operator in which case matches to those sub-expressions will be redacted but those to other sub-expressions will not.

Once the possible redactions have been performed, the process passes to step 64, in which the text resulting from the redaction in step 62 is re-examined.

The re-examination performed in step 64 can take the same form as the examination of the text performed in step 54 described above, although it would of course be expected in most cases that the effect of the redaction performed in step 62 would be to reduce the number of occasions on which an expression in the expression list matches the textual content.

It is then determined in step 66 of the process shown in Figure 2, after the re-examination has been performed, whether the final score is greater than or equal to the threshold value, in the same manner as described with reference to step 56. If the score is greater than or equal to the threshold value, then it is determined that the policy would be violated by the transmission of the message.

If it is found in step 66 that the policy would not be violated by the transmission of the message, then the process passes to step 68, and the message is transmitted to the recipient intended by the sender, with the text resulting from the redaction. In an embodiment used to implement policies relating to the content of web traffic, or policies that control the transfer of information, the transfer of the file, or the information, is permitted, with the redaction.

However, if it is found in step 66 that transmitting even the redacted message would violate the policy, the process passes to step 70, in which case a disposal is performed in accordance with the policy. For example, the policy may state that the message should simply be discarded, or may state that the message may not be transmitted but that a notification should instead be sent to the sender and/or intended recipient of the message. Where the policy violation arises because of the textual content of an attachment to the message, the policy may allow the message to be sent without the relevant attachment.

In an embodiment used to implement policies relating to the content of web traffic, or to policies that control other information transfers, the transfer may be prevented in whole or in part, and/or an explanatory message may be displayed to the user.

There is thus disclosed a method of policy enforcement that allows for improved results, particularly in a situation in which structured data is used in an unstructured context.

## Claims

1. A method of applying a policy to a text in information that is intended to be transferred, the method comprising:
searching the text for data having a predefined form;
searching a dataset for additional data associated with any data having the predefined form found in the text;
generating a supplementary search query using said additional data;
searching the text using the supplementary search query;
applying the policy based on a result of the search using the supplementary search query; and
allowing or preventing the transfer of the information, in response to a result of applying the policy.

2. A method as claimed in claim 1, wherein the data having the predefined form comprises a token in the text, or a plurality of tokens.

3. A method as claimed in claim 1 or 2, comprising searching the dataset using a fuzzy matching technique.

4. A method as claimed in any preceding claim, wherein the step of searching the text using the supplementary search query comprises searching the text for the additional data.

5. A method as claimed in any preceding claim, comprising receiving the text in an electronic mail message, wherein the step of applying the policy to the text comprises determining at least one applicable policy based on a sender and a recipient of the electronic mail message.

6. A method as claimed in any preceding claim, comprising receiving the text in an electronic mail message, wherein the step of applying the policy to the text comprises determining whether an applicable policy applies to a message content and/or to an attachment of the message and/or to the information content of metadata of the electronic mail message.

7. A method as claimed in any of claims 1 to 6, comprising receiving the text in a download from an external network, wherein the step of applying the policy to the text comprises determining at least one applicable policy based on an identity of a user requesting the download.

8. A method as claimed in any of claims 1 to 6, comprising receiving the text in an upload to an external network, wherein the step of applying the policy to the text comprises determining at least one applicable policy based on an identity of a user requesting the upload.

9. A method as claimed in any of claims 1 to 6, comprising receiving the text in a download from a server, wherein the step of applying the policy to the text comprises determining at least one applicable policy based on an identity of a user requesting the download.

10. A method as claimed in any of claims 1 to 6, comprising receiving the text in an upload to a server, wherein the step of applying the policy to the text comprises determining at least one applicable policy based on an identity of a user requesting the upload.

11. A method as claimed in any of claims 1 to 6, comprising receiving the text in a data transfer to or from a removable storage device from a user device having an endpoint protection product.

12. A method as claimed in any preceding claim, wherein the step of applying the policy to the text comprises identifying redactable text in the received text.

13. A method as claimed in claim 12, wherein the step of redacting the text comprises:
identifying in the text a token that might be involved in a policy violation;
recording an extent of the token within the text content; and
determining a position and extent of each character within the token; and
blanking each character in the token.

14. A method as claimed in any preceding claim, wherein the step of applying the policy to the text comprises applying the policy based on a result of the search using the supplementary search query combined with a result of searching the text using a predefined expression list.

15. A computer program product, comprising instructions for causing a programmed device to operate in accordance with the method of any preceding claim.
